# DEMANDE DE BREVET EUROPEEN

(11) **EP 4 016 335 A1**
(43) Date de publication de la demande: **22.06.2022**
(21) Numéro de dépôt: 21214796.1
(22) Date de dépôt: 15.12.2021
(51) Int. Cl.: G06F 16/906, G06F 16/9535

(54) **PROCEDE POUR CLASSIFIER UN PROFIL UTILISATEUR, SYSTEME DE CLASSIFICATION**

(30) Priorité: 15.12.2020 FR 2013271
(71) Demandeur: 4INDATA, 92700 Colombes (FR)
(72) Inventeur: SAJADI ANSARI, Fatemeh, 75019 PARIS (FR); KHELIFI, Aymen, 78230 Le Pecq (FR)
(74) Mandataire: Oak & Fox

(57) **Abrégé**

Système comportant :
▪ un terminal électronique (T₁) comprenant des moyens de communication, lesdits moyens de communication permettant de recevoir des données provenant d'une pluralité de ressources de donnes et étant configuré pour ;
▪ sélectionner un ensemble de contenus échangé (Dₖ) avec un premier utilisateur (U₁) du terminal (T₁), lesdits contenus étant associés au premier utilisateur (U₁),
▪ extraire des termes (Tₖᵢ) de l'ensemble des contenus numériques (Dk);
▪ générer des messages comportant lesdites données extraites;
▪ recevoir des données traitées par ledit serveur distant,

▪ un serveur (SERV₁) distant configuré pour recevoir les données émises par le terminal électronique et mettre en œuvre un réseau de neurones (CNN₁) entrainé pour produire des sorties (K_{F}) alimentant différents classifieurs, ledit serveur (SERV₁) étant, en outre, configuré pour générer une liste de profils utilisateurs ayant échangé des données avec le premier utilisateur (U₁).

## Description

### Domaine de l'invention

L'invention se rapporte au domaine des méthodes et systèmes pour classifier automatiquement un profil utilisateur utilisant au moins une ressource d'un réseau de données en fonction des données produites par ses interactions avec lesdites ressources et lesdits utilisateurs. Le domaine de l'invention se rapporte plus particulièrement à la détection automatique d'un profil utilisateur interagissant singulièrement au sein d'une communauté et plus particulièrement à l'égard d'au moins un utilisateur. Notamment, le domaine de l'invention se rapporte aux méthodes et aux systèmes de détection de profils utilisateurs dont les interactions au sein d'une communauté peuvent être analysées et détectées à partir d'une modélisation numérique desdites interactions.

### État de la technique

A ce jour, les réseaux de données sont de plus en plus complexes et utilisent différents types de composants permettant aux individus d'interagir ensemble de différentes manières. Il résulte de cette complexité accrue de ces réseaux une grande hétérogénéité de ces derniers. Notamment, de cette complexité accrue, il résulte différentes natures d'interactions entre utilisateurs qui traduisent des comportements différents selon les profils utilisateurs de ces réseaux. De ce fait les exploitations de ces réseaux deviennent très diversifiées et conduisent à une hétérogénéité des interactions et des comportements d'individus.

Il existe des méthodes pour identifier des comportements particuliers, tels que des comportements suspects ou anormaux d'individus vis-à-vis d'autres individus au sein d'une communauté. Généralement, ces méthodes reposent sur un profilage d'utilisateurs basés sur des techniques intellectuelles, mettant en œuvre une étude psychologique ou psychique d'individus qui impliquent un rapprochement avec des archétypes des profils types connus.

Toutefois, ces méthodes sont peu efficaces dans la mesure où elles impliquent une détection de l'individu suspect après qu'ait eu lieu une action susceptible de causer un dommage ou un préjudice à un tiers au sein d'une communauté. Par ailleurs, ces méthodes sont inefficaces au sein de certains réseaux de données qui font interagir un grand nombre d'individus dans lesquels il est difficile de détecter un comportement suspect rapidement.

Pourtant il existe un réel besoin d'identifier très tôt des profils d'utilisateurs à risques au sein de plateformes numériques. En effet, ces dernières suscitent l'intérêt des plus jeunes, brassent de nombreuses communautés et favorisent des contacts et des échanges numériques entre utilisateurs rapidement.

Ce besoin existe pour détecter des harceleurs, des pédophiles, des terroristes ou des individus ayant des propos ou comportement racistes ou tout autre individu susceptible de nuire à un individu ou de présenter un risque au sein d'une communauté.

D'une manière générale, il existe un besoin de classer des individus de manière non triviale, c'est-à-dire autrement qu'en prenant en compte des propriétés déclaratives des individus comme leur âge, genre, centre d'intérêt, etc. Le problème de l'invention se rapporte à celui de la classification d'individus utilisant les réseaux de données.

Indépendamment de la communauté et du type de profils, il existe un besoin d'identifier automatiquement des profils d'utilisateurs singuliers au sein d'une communauté selon le type d'interactions numériques employé. Plus généralement, il existe un besoin de générer une liste d'individus associée à une probabilité d'actions, lesdits individus ayant un lien informatique avec un individu donné pouvant être caractérisé par des interactions tangibles, quantifiables et mesurables par des critères techniques.

Un problème non résolu est comment classer et identifier automatiquement un profil ou une liste de profils utilisateurs selon leurs interactions au sein des réseaux de données utilisés de manière à identifier des interactions singulières.

### Résumé de l'invention

La présente invention permet de pallier les inconvénients précités. Notamment, la solution technique détaillée ci-après permet de dépasser les limitations actuelles du fait qu'elle fait intervenir des moyens techniques et une mise en œuvre automatique d'une détection de profils utilisateurs basés sur la mise en œuvre d'un réseau de neurones entrainés pour classifier des vecteurs caractéristiques propres à des interactions de données d'une pluralité d'utilisateurs.

Selon un aspect l'invention concerne un procédé mis en œuvre par ordinateur de classification automatique d'un profil d'utilisateur d'une pluralité de ressources d'un réseau de données, ledit procédé comprenant :
▪ sélection automatique d'un ensemble de premiers contenus numériques échangés entre au moins deux utilisateurs, les contenus numériques étant associés à un identifiant d'un premier utilisateur ;
▪ calcul à partir d'une première fonction apprenante à laquelle sont appliqués des vecteurs d'entrée générés à partir des premiers contenus numériques de vecteurs caractéristiques de sorties, lesdits premiers vecteurs caractéristiques de sorties alimentant:
   ∘ un premier classifieur de profils utilisateurs comportant au moins une première classe associée à un âge dudit premier individu et une seconde classe associée au genre du premier individu ;
▪ calcul à partir d'une seconde fonction apprenante à laquelle est appliquée des données d'entrée ou des vecteurs d'entrée générés à partir des premiers contenus numériques échangés entre au moins les deux utilisateurs de seconds vecteurs caractéristiques de sorties, lesdits seconds vecteurs caractéristiques de sorties alimentant :
   ∘ un second classifieur sémantique comportant au moins une troisième classe ontologique caractérisant un domaine sémantique prédéfini en fonction d'une première ontologie prédéfinie et des occurrences des termes extraits dans chaque contenu numérique sélectionné et ;
▪ calcul de troisièmes vecteurs caractéristiques de sorties, à partir d'une troisième fonction dont les entrées comprennent :
   ∘ au moins une donnée caractérisant un nombre d'échanges du premier individu avec au moins un second utilisateur au sein d'une ressource numérique prédéfinie,
   ∘ au moins une donnée caractérisant une donnée temporelle relative aux d'échanges du premier individu avec au moins un second utilisateur au sein d'une ressource numérique prédéfinie,
   ∘ au moins une donnée caractérisant un nombre d'individus associés à un échange de données avec le premier utilisateur au sein d'une ressource ;
      lesdits vecteurs caractéristiques de sorties alimentant :
      ∘ un troisième classifieur caractérisant des échanges de données entre au moins les deux utilisateurs ;
▪ génération au moyen d'un calculateur d'une liste de profils utilisateurs, ladite liste de profils utilisateurs comportant au moins un profil utilisateur dont les vecteurs caractéristiques ont été classés dans une pluralité de classes de chaque classifieur.

Le procédé de l'invention peut également être décrit comme un procédé de prédiction automatique d'un type d'échange de données susceptible de survenir entre deux individus ou encore comme un procédé d'identification d'un profil utilisateur échangeant acteur un premier utilisateur prédéfini.

Un avantage de l'invention est de corréler différents vecteurs caractéristiques permettant de déterminer avec une meilleure fiabilité des profils d'utilisateurs d'intérêts selon le champ sémantique déterminé et selon un profil d'un premier utilisateur déterminé. La détermination automatique de vecteurs caractéristiques correspondant à des échanges entre deux utilisateurs permet d'obtenir une meilleure identification de profil d'utilisateurs présentant un risque au sein d'une communauté ou pour un individu. Les échanges peuvent être caractéristiques d'un champ sémantique donné ce qui permet de mieux discriminer les faux positifs d'une telle identification.

Un avantage de l'invention est de classer des individus en tenant compte de propriétés intrinsèques des outils numériques utilisés par un individu et ses interactions au sein de ces outils de manière à s'affranchir de paramètres déclaratifs et peu fiables.

Différents exemples d'utilisation de l'invention peuvent être cités outre l'exemple du harcèlement détaillé dans la description qui suit:
- Les interactions de sportifs au sein d'une organisation utilisant un réseau de données afin de classer des profils d'utilisateurs ayant des échanges suscitant de la motivation par exemple ou des échanges induisant des situations d'isolement au sein d'une équipe.
- Les interactions de personnes souhaitant approcher ou pénétrer une organisation, telle qu'une entreprise, afin d'extraire et exploiter des informations confidentielles en approchant des cibles fragilisées ou stratégiques.
- Les interactions de personnes au sein d'organisations politiques, événementiels ou média, visant à saboter un événement donné.

L'invention trouve de nombreuses applications dans différents domaines dans la mesure où la classification des individus est réalisée selon des classes organisées selon des propriétés des échanges dans le temps ou dans l'espace, selon leur répétition, leur densité ou encore leur étalement dans la durée et dans différents champs sémantiques.

Selon un mode de réalisation,
▪ la première fonction apprenante comprend la mise en œuvre d'un premier réseau de neurones et/ou d'une fonction mettant en œuvre une machine à vecteurs de support, ladite première fonction apprenante étant entrainée à partir d'un ensemble de données comprenant des contenus numériques échangés entre au moins deux utilisateurs ; et
▪ la seconde fonction apprenante comprend la mise en œuvre d'une fonction apprenante intégrant un apprentissage statistique et/ou d'un second réseau de neurones, ladite dont l'entrée comprend des descripteurs extraits de l'ensemble des contenus numériques échangés entre au moins les deux utilisateurs, le second réseau de neurones étant entrainé à partir d'un ensemble de données comprenant des contenus numériques échangés entre au moins deux utilisateurs:
▪ la troisième fonction comprend la mise en œuvre d'un système expert et/ou d'un troisième réseau de neurones.

Un avantage est de configurer une intelligence artificielle qui soit adaptée à la nature des données d'entrées du système pour chaque modèle de données traité. Un autre avantage est de combiner d'une part une intelligence artificielle pour traiter les données du champ sémantique donné et d'autre part un système expert pour traiter la nature des échanges entre deux individus. Une telle configuration permet d'obtenir le meilleur bénéfice des deux systèmes qui sont combinés ensemble selon le modèle de données.

Selon un mode de réalisation, lorsque la troisième fonction comprend la mise en œuvre d'un système expert, ledit système expert comprenant une base de faits, une base de règle et un moteur d'inférence, la base de règles comportant des seuils et des durées configurées, ladite configuration pouvant être automatiquement mise à jour en fonction de la classification des vecteurs de sorties.

Selon un mode de réalisation, au moins une entrée de la troisième fonction est un vecteur d'entrée comportant un ensemble d'événements horodatés, lesdits événements correspondant à des échanges de données entre au moins le premier utilisateur et au moins un autre utilisateur.

Un avantage est de traiter dans le système tous les événements relatifs à un échange entre au moins deux individus quel que soit la ressource de données, le nombre d'individus, le nombre d'échanges, etc. Cette configuration permet d'améliorer la qualité de l'apprentissage de l'intelligence artificielle.

Selon un mode de réalisation, la première fonction apprenante, la seconde fonction apprenante et la troisième fonction sont une même fonction.

Un avantage de cette configuration est de disposer d'une intelligence artificielle unique dans laquelle les données d'entrées sont formatées pour définir des vecteurs d'entrée comportant l'ensemble des descripteurs sémantiques, les données qualifiant les échanges de données et les contenus échangés et des métadonnées. Avantageusement, une telle solution est intéressante lorsque chaque donnée formatée est suffisamment bien définie. Ainsi, la solution peut être mise en œuvre dans un premier temps avec un système expert pour classifier les vecteurs caractéristiques correspondant aux échanges de données, ce qui permet de définir les paramètres de seuils, les coefficients de certaines fonctions et plus généralement la configuration des domaines de validité des variables. Dans un second temps, l'intelligence artificielle peut être configurée pour se substituer au système expert ou bien la compléter grâce à une fonction apprenante par exemple des coefficients et seuils, etc. qualifiant chaque échange de données.

Selon un mode de réalisation, les descripteurs extraits comprennent des termes textuels extraits d'un contenu numérique textuel, des métadonnées de contenus numériques, de fichier numérique multimédia.

Un avantage est de disposer d'une fonction sémantique permettant d'extraire les termes d'un texte ou plus généralement d'un contenu multimédia et à partir de thésaurus, dictionnaires, et d'ontologies de définir des descripteurs sémantiques formatés pour être traités par une fonction apprenante. La fonction apprenante est mise en œuvre par des moyens de calculs et les données spécialement formatées peuvent alimenter une base de données du système.

Selon un mode de réalisation, l'ensemble des premiers contenus numériques échangés entre au moins deux utilisateurs comprennent au moins une donnée correspondant à :
▪ Un message de données numériques ;
▪ Une image numérique ;
▪ Une vidéo numérique,
▪ Une interaction à une publication numérique comportant au moins une annotation numérique.

Selon un mode de réalisation, l'analyse sémantique comprend une analyse statistique des termes extraits de chacun des contenus numériques échangés entre les deux individus.

Selon un mode de réalisation, lesdits vecteurs caractéristiques classifiés dans l'ensemble des classifieurs sont associés à un score de vraisemblance, l'ensemble des scores de vraisemblance permettant de calculer un indicateur quantifié déterminant l'inclusion ou non dans la liste générée d'un utilisateur ayant échangé des données avec le premier utilisateur.

Un avantage de l'utilisation d'un score de vraisemblance est d'exploiter des sorties de différents classificateurs de différentes intelligences artificielles ou systèmes experts. Par exemple, le score de vraisemblance permet de ne pas prendre en compte un individu dans la liste générée lorsqu'un vecteur n'est pas classifié dans l'un des classifieurs ou que sa classification n'est pas pertinente au regard d'une classe donnée alors que les autres vecteurs de sorties des autres intelligences artificielles le sont. Ou encore selon un autre exemple, cette solution permet de considérer des individus pour lesquels les classifications de vecteurs dans chacun des classifieurs corroborent par le franchissement de seuils de vraisemblance.

Selon un mode de réalisation, le procédé comprend un horodatage desdits premiers contenus numériques sélectionnés.

Un avantage est de construire des entrées qui prennent en compte un séquencement des échanges. Ces derniers peuvent être caractéristiques d'un type d'échange entre deux individus selon le champ sémantique considéré.

Selon un mode de réalisation, l'analyse sémantique comprend la mise en œuvre d'un réseau de neurones par un traitement d'images en entrée et fournissant en sortie des vecteurs caractéristiques classifiés dans le premier classifieur.

Selon un mode de réalisation, une première donnée temporelle en entrée de la troisième fonction comprend la fréquence des données émises par le second utilisateur.

Selon un mode de réalisation, une seconde donnée temporelle en entrée de la troisième fonction comprend une variabilité temporelle journalière des données émises par le second utilisateur.

Selon un mode de réalisation, une troisième donnée temporelle en entrée de la troisième fonction comprend une durée moyenne de réponse entre deux échanges successifs entre deux utilisateurs échangeant des données.

Selon un mode de réalisation, au moins un réseau de neurones est un réseau de neurones convolutif et que la classification des données est réalisée à partir d'une opération de régression.

Selon un mode de réalisation, les corpus sémantiques sont mis à jour à partir d'une classification réalisée à partir d'un réseau de neurones sur un corpus de documents numériques prédéfinis.

Selon un autre aspect, l'invention concerne système comporte:
▪ un terminal électronique comportant un calculateur, au moins une mémoire et un afficheur, et des moyens de communication pour échanger des données avec un réseau de données, lesdits moyens de communication permettant de recevoir des données provenant d'une pluralité de ressources de données, telle que des plateformes Web et réseaux sociaux, ledit calculateur étant configuré pour ;
   ∘ sélectionner un ensemble de contenus échangé avec un premier utilisateur du terminal, lesdits contenus étant associés au premier utilisateur,
   ∘ extraire d'un ensemble de descripteurs de l'ensemble des contenus numériques échangés entre au moins deux utilisateurs;
   ∘ générer des messages comportant lesdites données extraites vers un serveur distant ;
   ∘ recevoir des données traitées par ledit serveur distant,
▪ au moins un serveur distant configuré pour recevoir les données émises par le terminal électronique et mettre en œuvre
   ∘ première fonction apprenante à laquelle est appliquée des vecteurs d'entrée générés à partir des premiers contenus numériques de vecteurs caractéristiques de sorties, lesdits premiers vecteurs caractéristiques de sorties alimentant:
      ▪ un premier classifieur de profils utilisateurs comportant au moins une première classe associée à un âge dudit premier individu et une seconde classe associée au genre du premier individu ;
   ∘ une seconde fonction apprenante à laquelle appliquée des données d'entrées ou des vecteurs d'entrée générés à partir des premiers contenus numériques échangés entre au moins les deux utilisateurs de seconds vecteurs caractéristiques de sorties, lesdits seconds vecteurs caractéristiques de sorties alimentant :
      ▪ un second classifieur sémantique comportant au moins une troisième classe ontologique caractérisant un domaine sémantique prédéfini en fonction d'une première ontologie prédéfinie et des occurrences des termes extraits dans chaque contenu numérique sélectionné et ;
   ∘ une troisième fonction délivrant des troisièmes vecteurs caractéristiques de sorties et dont les entrées comprennent :
      ▪ au moins une donnée caractérisant un nombre d'échanges du premier individu avec au moins un second utilisateur au sein d'une ressource numérique prédéfinie,
      ▪ au moins une donnée caractérisant une donnée temporelle relative aux d'échanges du premier individu avec au moins un second utilisateur au sein d'une ressource numérique prédéfinie,
      ▪ au moins une donnée caractérisant un nombre d'individus associés à un échange de données avec le premier utilisateur au sein d'une ressource ;
         lesdits vecteurs caractéristiques de sorties alimentant :
         ▪ un troisième classifieur caractérisant des échanges de données entre au moins les deux utilisateurs ;
   ledit serveur étant, en outre, configuré pour générer une liste de profils utilisateurs associés à une classification de vecteurs caractéristiques dans chaque classifieur, ladite liste comportant au moins un second utilisateur ayant échangé des données avec le premier utilisateur, ledit serveur étant configuré pour émettre vers un second terminal électronique un message d'alerte lorsque ledit second profil utilisateur est identifié dans la liste générée.

Selon un mode de réalisation, l'ensemble de contenus numériques est collecté depuis une pluralité de ressources numériques.

### Brève description des figures

D'autres caractéristiques et avantages de l'invention ressortiront à la lecture de la description détaillée qui suit, en référence aux figures annexées, qui illustrent :
[Fig. 1] : un exemple de réalisation d'une mise en œuvre d'un procédé de l'invention ;
[Fig. 2] : un exemple de réalisation d'une mise en œuvre du système de l'invention,
[Fig. 3] : un exemple de classifieur permettant d'aboutir à la génération d'une liste d'individus classés selon un paramétrage donné.

### Description détaillée

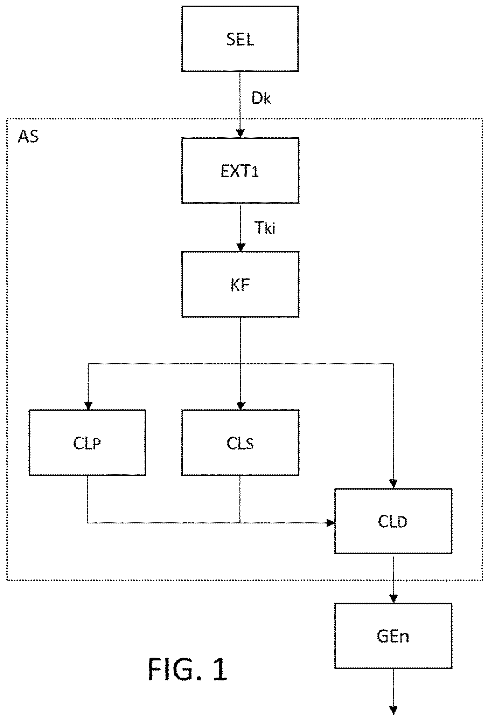

La figure 1 représente un diagramme des principales étapes du procédé de l'invention.

Une première étape, SEL, comprend la sélection d'un ensemble de contenus numériques Dₖ d'au moins une ressource de données Rᵢ. Une ressource de données Rᵢ peut être une plateforme numérique d'échanges de données de différents utilisateurs connectés entre eux, telle qu'un réseau social numérique, un site internet, une application WEB, etc.

Selon un mode de réalisation, le procédé comprend une étape préalable de sélection d'un ensemble de ressources Rᵢ installées sur un appareil électronique tel qu'une tablette numérique, un Smartphone ou un PC. La sélection est préférentiellement configurée lors d'un paramétrage puis réalisée automatiquement lors de l'exécution du procédé. Selon un mode particulier, des ressources de données Rᵢ peuvent être ajoutées ou retirées.

Une ressource de données Rᵢ est associée à un identifiant d'un premier utilisateur U₁. Cet identifiant peut être associé à un mot de passe. Le premier utilisateur est préférentiellement l'utilisateur d'un terminal électronique T₁ depuis lequel les ressources de données Rᵢ sont accessibles avec un identifiant du premier utilisateur U₁.

Selon un mode de réalisation, les contenus numériques Dₖ peuvent être de différents types de format tel que :
- des contenus textuels numériques formatés dans un langage informatique tel que le HTML, XML, PDF, PostScript, XHTML, TXT, PHP, etc. ;
- des contenus d'images numériques encodés dans un format de type PNG, TIFF, JPEG, etc. ;
- des contenus vidéos numériques encodés dans un format de type MPEG, OGM, AVI, FLV, boomerang, live, etc.

Les contenus numériques Dₖ peuvent correspondre à des messages numériques échangés sur une messagerie, des commentaires numériques édités sur une plateforme de partage de données et rattachés à un contenu numérique déjà existant tel qu'un forum de données, des statuts numériques associés à une page de données ou un profil utilisateur, des vidéos téléchargées depuis ou vers un site distant ou des vidéos diffusées depuis une plateforme, des photos téléchargées depuis ou vers un site distant et possiblement partagées avec d'autres utilisateurs.

Le procédé de l'invention comprend une extraction automatique et en continu des contenus numériques échangés Dₖ. Ces contenus peuvent comprendre des métadonnées telles que des labels de données, des mots clefs, des champs de description, des dates, des positions, des URL ou plus généralement des pointeurs vers des ressources de données.

Les contenus extraits Dₖ sont enregistrés dans une mémoire. Il peut s'agir d'une mémoire du terminal T₁ et/ou d'une mémoire d'un serveur distant SERV₁ lorsque ces derniers contenus sont transmis à un serveur distant SERV₁. Selon un mode de réalisation, les contenus extraits Dₖ comprennent des termes ou champs textuels formatés dans un langage de données prédéfini, des métadonnées associées à un contenu numérique donné, un média tel qu'une image ou une vidéo d'un contenu numérique donné.

Selon un mode de réalisation, les contenus extraits Dₖ sont traités de manière à définir des entrées d'une ou de plusieurs fonctions. Selon un exemple, trois types de fonctions F₁, F₂, F₃ sont utilisées dans le cadre de l'invention. Selon un mode de réalisation, les fonctions F₁ et F₂ sont des fonctions apprenantes, dont l'apprentissage est réalisé par une intelligence artificielle, et la fonction F₃ comprend la mise en œuvre d'un système expert basé sur un ensemble de règles, une base de fait et un moteur d'inférence. Selon un autre mode de réalisation, la fonction F₃ est mise en œuvre par une technique d'intelligence artificielle pouvant intégrer un système expert. A titre d'exemple, les valeurs des constantes et paramètres définissant des règles, des seuils et du paramétrage du système expert peuvent être déduites de la mise en œuvre d'une intelligence artificielle configurée pour générer des coefficients ou un paramétrage du système expert.

La première fonction F₁ permet de déterminer automatiquement quel est le profil utilisateur du terminal T₁. La seconde fonction F₂ permet de déterminer automatiquement un ensemble de contenu sémantique susceptible d'être dans un domaine ontologique prédéfini dont on souhaite extraire des vecteurs caractéristiques de ce domaine. La troisième fonction F₃ permet de déterminer des profils utilisateurs échangeant avec le premier utilisateur susceptible de correspondre à un risque associé au domaine ontologique prédéfini.

Selon un exemple la troisième fonction F₃ permet de construire elle-même le raisonnement adapté au cas particulier qu'elle doit traiter en répétant un cycle détection et de choix de règles pertinentes à utiliser et à déclencher.

Selon un mode de réalisation, la première et la seconde fonction F₁, F₂ sont mises en œuvre par des réseaux de neurones ou une méthode d'apprentissage statistique mis en œuvre par un algorithme de type machine d'apprentissage, plus connu sous le nom de « Machine Learning » ou « apprentissage automatique ».

Les vecteurs d'entrée peuvent être de type Lexique, CharLSYM, Fasttext, LIWC, Surface, Méta en ce qui concerne les contenus textuels. Les vecteurs d'entrée peuvent être de type image.

Le modèle d'apprentissage automatique peut être de type réseau de neurones tel qu'un réseau CNN dont l'acronyme désigne : « Convolutional Neural Network », de type SVM, dont l'acronyme désigne : « support vector machine » ou de type BERT, dont l'acronyme désigne : « Bidirectional Encoder Représentations from Transformers », ou de type LSTM désignant « Long Short-Term Memory ». D'autres technologies d'intelligence artificielle peuvent être mises en œuvre dans le cadre de l'invention. Lorsque différentes technologies d'intelligence artificielle sont mises en œuvre pour classer des données sémantiques, des données de type multimédia (photo, vidéo, etc.) ou encore des métadonnées ou des données caractérisant un type d'échange, ces dernières peuvent être mises en œuvre par différents calculateurs, voire différents serveurs. Les classifieurs peuvent ensuite être regroupés dans une même application d'un même serveur afin de calculer les indicateurs générant une liste de profils identifiés avec un risque.

Ainsi, l'étape de calcul des vecteurs caractéristiques KF dans la figure 1 peut être réalisée sur une ou plusieurs machines.

Selon un mode de réalisation, les données extraites sont transmises à serveur de données distant SERV₁. Le serveur de données distant SERV₁ est configuré pour mettre en œuvre au moins un réseau de neurones ou une méthode de machine learning telle qu'une méthode d'apprentissage statistique.

Selon un mode de réalisation, chacun des contenus extraits est annoté avec des données de contextes à savoir la ressource de données Rᵢ depuis laquelle elle a été extraite, une date, un format ou un type de contenu. Selon certaines variantes, d'autres données peuvent être associées aux contenus extraits telles que des données sociales indiquant le type d'échange et le nombre d'intervenants ayant participé à un échange.

### 1^{er} Classifieur

Selon un mode de réalisation, l'invention met en œuvre un classifieur CL_{P} configuré pour classifier automatiquement le genre et le sexe du premier utilisateur U₁. On rappelle que le premier utilisateur U₁ est l'utilisateur d'un terminal électronique T₁ sur lequel le procédé exécute les étapes avec possiblement un serveur distant SERV₁. Le terminal T1 est configuré pour récupérer les contenus extraits et les envoyer à au moins un serveur distant SERV₁. Ce classifieur de profils utilisateurs CL_{P} comporte au moins une première classe C₁ associée à un âge du premier individu U₁ et une seconde classe C₂ associée au genre du premier individu U₁. Chaque classe peut comporter des sous-classes permettant de classifier différentes tranches d'âge ou différentes sous-catégories d'une classe. Un avantage du premier classifieur CL_{P} est d'obtenir une solution dans laquelle il n'est pas nécessaire de définir un profil utilisateur d'un premier utilisateur U₁. Notamment, il n'est pas nécessaire de définir l'âge et le genre du premier utilisateur puisque le profil est automatiquement généré à partir du premier classifieur CL_{P}. Les données classifiées par le premier classifieur CL_{P} permettent notamment de déterminer automatiquement les données d'âge et de genre du premier utilisateur U₁. A cet effet, les interactions du premier utilisateur U₁, au sein d'au moins une ressource de données Rᵢ, permettent de collecter des contenus numériques qui sont échangés, commentés ou téléchargés au sein de ladite ressource de données Rᵢ par le premier utilisateur U₁. Le premier serveur SERV₁ distant collecte alors les données extraites Dₖ des différentes interactions du premier utilisateur U₁ et définit des vecteurs d'entrées d'un réseau de neurones. Le réseau de neurones ou toute autre technologie mettant en œuvre une intelligence artificielle telle qu'une méthode d'apprentissage statistique permet de générer des vecteurs de sortie qui permettent d'alimenter un classifieur CL_{P}. Le premier classifieur CL_{P} est alors en mesure de discriminer un âge et un genre du premier utilisateur U₁.

### 2eme Classifieur

Un second classifieur CLs est configuré de sorte à classifier des vecteurs de sorties d'un réseau de neurones et/ou de l'intelligence artificielle mettant en œuvre un apprentissage statistique selon une ontologie prédéfinie. Le second classifieur CLs est configuré selon un domaine sémantique donné. Le domaine peut être celui du harcèlement, du terrorisme, des prédateurs sexuels, ou des individus ayant des propos ou comportements racistes, etc. A cet effet, le réseau de neurones ou un système ayant appris automatiquement à partir d'un corpus sémantique peut être entrainé à partir d'un ensemble de données constituant un corpus d'apprentissage.

A cette fin, des dictionnaires, des thésaurus et/ou des ontologies spécifiques peuvent être utilisés afin d'extraire et analyser les contenus textuels des documents numériques extraits. Selon un exemple de réalisation, différentes ontologies peuvent être utilisées. Il peut s'agir par exemple d'ontologies grammaticales ou syntaxiques.

### 3eme classifieur

L'invention permet de prendre en compte les données caractérisant des échanges de données entre individus au sein de différentes ressources de données Rᵢ. Ces données caractérisant les échanges sont déduites automatiquement du contexte dans lequel les contenus numériques Di sont échangés entre individus U₁, Up au sein des différentes ressources de données.

Ces données définissent des entrées d'une troisième fonction F₃ mettant en œuvre un système expert et/ou une intelligence artificielle afin que soient classés en sortie des vecteurs caractéristiques de sortie au sein d'un troisième classifieur CL_{D}. Cette classification est réalisée, par exemple, au moyen d'un réseau de neurones lorsque la troisième fonction est une fonction apprenante ou par une fonction mettant en œuvre un système expert. Ce dernier peut être également mis en œuvre par une fonction apprenante.

Parmi les données caractérisant les échanges de données, le procédé et le système de l'invention permettent de prendre en compte le nombre de messages échangés entre deux individus, dont le premier individu U₁ et au moins un autre individu U_{P}. Il peut s'agir alors d'une classification quantitative de données émises par certains individus.

Cette caractéristique peut être obtenue en relevant régulièrement et automatiquement les dates et les identifiants des individus échangeant avec le premier individu U₁. Les données caractérisant le nombre d'échanges au sein d'une même ressource Rᵢ sont des données d'entrée du réseau de neurones et peuvent être formatées par un vecteur comportant la date de la donnée échangée, l'identifiant associé à l'auteur d'une donnée échangée, la ressource Rᵢ depuis laquelle la donnée est échangée, etc.

Selon un exemple, un ensemble d'événements provenant d'un ensemble de ressources comporte une pluralité d'événements horodatés qui correspondent à des actions du premier utilisateur notamment des messages émis, des interactions numériques au sein de ressources de données, des messages reçus ou des notifications reçues ou encore des données générées par d'autres utilisateurs et qui sont associées à un identifiant du premier utilisateur sur une ressource de données du réseau.

Dans cette configuration, une classe C₄ permet de classifier les échanges entre individus en fonction de la quantité et possiblement de la densité ou la fréquence des échanges notamment entre les individus U₁ et U_{P}. Cette classification permet notamment de discriminer des cas dans lesquels de nombreux échanges entre deux individus sont observés ou au contraire des échanges sporadiques ou isolés entre individus. Le nombre de messages échangés peut être rapporté à un intervalle de temps afin de traiter une densité de message sur une échelle de temps.

Le procédé et le système de l'invention peuvent être configurés selon un mode de réalisation de sorte qu'il comprend la définition d'une cinquième classe C₅ associée à une caractérisation d'une donnée temporelle des d'échanges du premier individu U₁ avec au moins un second utilisateur Up au sein d'une ressource de données Rᵢ prédéfinie.

Selon un mode de réalisation, la caractérisation d'une donnée temporelle peut correspondre à une quantification de la variabilité au sein des heures d'une journée de l'envoi de messages d'un utilisateur U₁ ou d'utilisateurs tels que l'utilisateur U_{P} avec qui le premier utilisateur U₁ échange des données. Cette classification permet de définir des classes de messages émis par des individus qui peuvent être regroupés selon certaines heures dans la journée ou la soirée ou au contraire des classes de messages ventilés au sein d'une même journée à des heures très différentes. Avantageusement, cette une sous-classe C₅₁ de la classe C₅ correspondant à cette caractérisation peut être définie.

Selon un mode de réalisation, la caractérisation d'une donnée temporelle peut correspondre à l'intervalle de temps moyen entre deux messages successifs émis par un utilisateur UP au premier utilisateur U₁. Cette caractérisation peut permettre de définir, par exemple, une sous-classe C₅₁ de la classe C₅.

Selon un autre mode de réalisation, la caractérisation d'une donnée temporelle peut correspondre à l'intervalle de temps moyen entre l'émission d'un message du premier utilisateur et la réponse d'un message émis par un utilisateur U_{P}. Cette caractérisation d'échange peut être classée par exemple dans une 3eme sous-classe C₅₃ de la classe C₅.

Selon un autre exemple, une sous-classe de C₅ peut comprendre la caractérisation de la durée d'un ensemble de messages échangés entre U₁ et un autre utilisateur U_{P}. En effet, les échanges peuvent se poursuivre sur une échelle de temps de la journée, de la semaine, du mois, voire des années. Ainsi, cette caractérisation permet de définir une classe d'échange entre utilisateurs. Cette classe peut être une sous-classe de la classe C₅, notée C₅₄ par exemple.

Selon un mode de réalisation, le classifieur comprend différentes classes C₅ ou sous-classe de C₅ caractérisant une donnée temporelle. La classification de ces données peut être réalisée pour une pluralité d'utilisateurs interagissant avec le premier utilisateur U₁.

Selon un mode de réalisation, le classifieur CL_{D} comprend une classe C₆ caractérisant le nombre d'individus associés à un échange de données avec le premier utilisateur U₁ au sein d'une ressource de données Rᵢ. Cette classe permet notamment de discriminer si l'échange est unilatéral ou si une pluralité d'utilisateurs est associée à un échange avec le premier utilisateur U₁, comme cela peut être le cas à partir de commentaires numériques associé à un statut numérique d'un individu posté sur une plateforme numérique. Un intérêt est de déterminer la probabilité de détection d'un profil d'individu donné ou encore la probabilité qu'un individu présente un risque donné vis-à-vis d'un premier individu U₁. Cette identification de profil peut correspondre à un risque associé à un type donné de profil d'individu. Ainsi, les échanges de données sont corrélés au contexte de l'échange. Par exemple, si la caractérisation d'un échange de données comportant des propos violant avec le premier utilisateur U₁ est conduite par un unique utilisateur Up donné, ses interactions peuvent être pondérées à la hausse dans la classification, si sa démarche corrobore avec celles d'autres utilisateurs, ses interactions peuvent être pondérées à la baisse, ou inversement en fonction des autres classifications des vecteurs caractéristiques. La classification d'un individu Up est réalisée à partir de l'analyse d'un ensemble de classifications de vecteurs caractérisant une pluralité de type d'échange dudit individu U_{P}. Dans d'autres cas, le procédé et le système de l'invention permettent de détecter un cas de harcèlement entre N utilisateurs à l'encontre d'un utilisateur. La répétition d'un nombre d'échanges d'une pluralité d'utilisateurs, lesdits utilisateurs étant associés à un échange de données avec un premier utilisateur U₁, peut alors être identifiée comme un risque.

La figure 1 représente une étape de calcul de vecteurs caractéristiques de sorties du réseau de neurones, cette étape est notée KF. Chaque réseau de neurones ou intelligence artificielle est entrainé(e) avec un ensemble de données labellisées.

En sortie des réseaux de neurones ou plus généralement des moteurs d'intelligence artificielle, un ensemble de classifieurs CL_{P}, CLs et CL_{D} sont représentés. Les classifieurs permettent de classifier les vecteurs de sortie. L'invention permet de tirer un bénéfice d'un ensemble de classifieurs afin de dresser une liste de profils utilisateurs réunissant un ensemble de caractéristiques classifiées qui peuvent être associés ensemble à un risque. Les utilisateurs classés ont au moins échangé ou posté des données au sein d'une ressource de données Rᵢ accessible au premier utilisateur U₁.

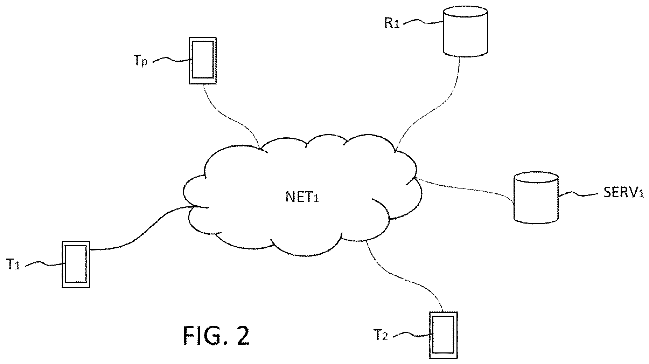

Les données sont continuellement collectées au sein des différentes ressources et émises vers un serveur disant SERV₁ comme cela est représenté sur la figure 2. A cet effet, la figure 2 représente un exemple simplifié dans lequel différents terminaux T₁, T_{P} respectivement du premier utilisateur U₁ et d'au moins un autre utilisateur U_{P}. Une ressource R₁ est représentée. Cette ressource Rᵢ peut être un site internet ou une plateforme d'échange sur lequel/laquelle les échanges entre le premier utilisateur U₁ et l'utilisateur U_{P} ont lieu.

La figure 2 représente en outre, un terminal U₂ correspondant au terminal T₂ duquel le procédé a été installé sur le terminal T₂ ou du moins une partie de l'installation. Le terminal T₂ reçoit les notifications émises en fonction du résultat de la classification des profils avec qui échange l'utilisateur U₁. Ainsi, des parents, représentés par U₂,peuvent être mis en alerte si un enfant U₁ est en discussion avec un individu Up suspect.

La figure 1 représente une étape GEN permettant de générer un indicateur d'un profil qui a été classé avec un pourcentage de similarité avec un seuil prédéfini dans chaque classifieur. Un intérêt est de définir des critères permettant de discriminer un ensemble de conditions devant être réunies afin de sélectionner un profil ou non.

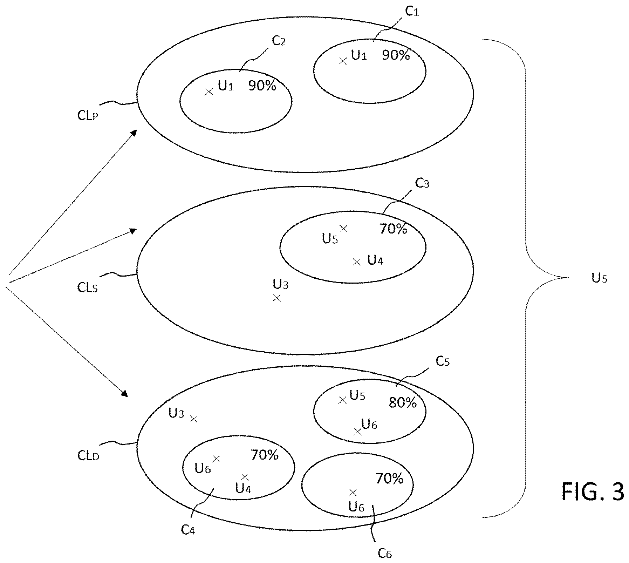

La figure 3 représente un cas de figure du procédé de l'invention appliqué à la classification de 4 profils utilisateurs {U₃, U₄, U₅, U₆} ayant interagi avec l'utilisateur U₁. L'utilisateur U₂ reçoit les notifications lorsqu'un utilisateur suspect, tel que l'utilisateur U₅, dans cet exemple, est détecté. La détection est réalisée par une analyse des classifications de chaque profil utilisateur dans une pluralité de classes ou de sous-classes.

Dans l'exemple de la figure 3, le premier classifieur CL_{P} permet d'identifier, par exemple, que le U₁ est une fille ayant entre 14 ans et 15 ans. Il s'agit des classes d'âge C₁ et la classe de genre C₂. La classification du profil U₁ est réalisée automatiquement grâce à un réseau de neurones ou une intelligence artificielle mettant en œuvre une méthode d'apprentissage statistique permettant d'analyser l'ensemble des contenus d'images et textuels des contenus numériques avec lesquels le premier utilisateur U₁ a interagi. Il peut s'agir d'interactions visant à commenter un contenu, télécharger un contenu, échanger un contenu avec un tiers ou encore consulter une page de données comportant ledit contenu. Dans le cas d'exemple de la figure 3, des seuils de vraisemblance de 90% sont définis dans chacune des classes C₁ et C₂ ou d'une sous-classe. Ces seuils sont utilisés pour réduire l'erreur ou l'incertitude et conclure avec une confiance donnée sur une hypothèse de genre et d'âge de l'individu U₁. Selon un mode de réalisation, les seuils de vraisemblances sont paramétrables pour chacune des classes ou sous-classes. Le procédé et le système de l'invention permettent de définir une classe ou sous-classe en fonction d'une valeur seuil à atteindre pour la valeur du vecteur caractéristique qui est classé. Selon un autre mode, il s'agit d'une valeur définie à partir d'une moyenne des valeurs des vecteurs caractéristiques d'une classe ou d'une sous-classe.

Le second classifieur CLs est un classifieur ontologique dans lequel un ensemble de classes ontologiques est configuré pour collecter des vecteurs caractéristiques sémantiques d'un ensemble d'individus interagissant avec le premier utilisateur U₁. Un intérêt de ce classifieur est de limiter le champ ou le périmètre de sélection de l'ensemble des utilisateurs ayant un intérêt ou un ayant un rapport donné avec le premier utilisateur U₁. Les ontologies peuvent être définies pour refléter un centre d'intérêt comme l'équitation par exemple. Elles peuvent être définies pour caractériser une manière de s'adresser à quelqu'un telles que le racisme, la pédophilie ou le harcèlement. Selon d'autres exemples, l'ontologie peut définir un registre sémantique propre au terrorisme. D'autres exemples peuvent être implémentés grâce au procédé de l'invention. L'exécution du procédé de l'invention est indépendante de la ou des classes ontologiques utilisées. Ainsi le procédé peut être adapté à n'importe quel champ sémantique donné. L'invention permet au sein d'un champ sémantique donné de définir des classes permettant d'identifier des profils utilisateurs ayant des interactions avec un premier utilisateur U₁ faisant apparaitre des vecteurs caractéristiques propre à des données temporelles ou d'un nombre d'utilisateurs échangeant avec le premier utilisateur U₁.

Dans le cas de figure de la figure 3, une classe C₃ correspond, par exemple, au champ sémantique du harcèlement. A cette fin des données d'entrainement des réseaux de neurones ou de l'intelligence artificielle intégrant un apprentissage statistique peuvent comprendre des dictionnaires, des labels ou étiquettes pré-identifiées, des bases de données ontologiques, des thésaurus, etc.

Dans le cas d'exemple de la figure 3, deux utilisateurs U₅ et U₄ sur les 4 utilisateurs de l'exemple sont classés dans la classe C₃ par le classifieur CLs. La classe C₃ est une classe, dans cet exemple, se rapportant au domaine sémantique du harcèlement. La classe C₃ est définie pour une similarité de 70% du champ lexical extrait des contenus échangés entre d'une part ces utilisateurs U₅ et U₄ et le premier utilisateur U₁.

Le classifieur CL_{D} permet d'appliquer une intelligence artificielle ayant été entrainée à partir de données caractérisant techniquement les interactions entre le premier utilisateur U₁ et l'ensemble des utilisateurs étudiés.

La classe C₄ caractérise une classification quantitative des échanges entre deux individus. Ainsi, les utilisateurs U₄ et U₆ ont échangé un grand volume de données, soit de manière directe par exemple par messagerie, soit par l'intermédiaire de commentaires d'un contenu numérique d'une plateforme.

Dans cet exemple, le fait que l'utilisateur U₄ soit dans la classe C₄ et C₆ montre que le grand volume d'échanges s'est fait parmi une grande communauté d'utilisateurs puisque la classe C₆ représente une classification dans laquelle les échanges se font au sein d'un grand nombre d'utilisateurs. Ainsi, il est possible d'identifier un individu agissant comme un certain type de harcèlement en bande.

Dans ce même exemple, l'utilisateur U₅ classé selon des critères pour lesquels ses échanges, par exemple, sont caractéristiques d'une grande variabilité d'heures d'échanges au sein de la journée. Ainsi, cette caractérisation permet d'identifier un profil utilisateur donné et de corroborer ce profil utilisateur avec sa classification dans une autre classe telle qu'une classe (non représentée) ou sous classe C₅₄ désignant des messages émis pendant de longues périodes de temps par exemple sur plusieurs mois.

L'invention permet donc d'identifier au moins une liste de profils utilisateurs ayant des échanges avec un utilisateur U₁ et dont chaque profil peut être associé à un risque vis-à-vis de ce dernier. Par exemple, il est possible d'identifier des interactions propres au racket, au harcèlement moral, au harcèlement sexuel, au harcèlement conduisant à l'isolement d'un individu, etc. non pas en analysant uniquement le champ sémantique, mais en analysant les types d'échanges de données et leur caractérisation technique prenant en compte des indicateurs temporels ou de contexte d'interaction selon la ressource de données.

## Revendications

1. Procédé mis en œuvre par ordinateur de classification automatique d'un profil d'utilisateur (U_{P}) d'une pluralité de ressources (S₁, S₂, S₃) d'un réseau de données (NET₁), **caractérisé en ce qu'**il comprend :
▪ sélection (SEL) automatique d'un ensemble de premiers contenus numériques (Dₖ) échangés entre au moins deux utilisateurs (U₁, U_{P}), les contenus numériques étant associés à un identifiant d'un premier utilisateur (U₁) ;
▪ calcul (AS) à partir d'une première fonction apprenante (F₁) à laquelle sont appliqués des vecteurs d'entrée générés à partir des premiers contenus numériques (Dk) de vecteurs caractéristiques de sorties (K_{F}), lesdits premiers vecteurs caractéristiques de sorties (K_{F1}) alimentant:
∘ un premier classifieur de profils utilisateurs (CL_{P}) comportant au moins une première classe (C₁) associée à un âge dudit premier individu (U₁) et une seconde classe (C₂) associée au genre du premier individu (U₁) ;
▪ calcul (AS) à partir d'une seconde fonction apprenante (F₂) à laquelle sont appliquées des données d'entrée ou des vecteurs d'entrée générés à partir des premiers contenus numériques (Dk) échangés entre au moins les deux utilisateurs (U₁, U_{P}) de seconds vecteurs caractéristiques de sorties (K_{F2}), lesdits seconds vecteurs caractéristiques de sorties (K_{F2}) alimentant :
∘ un second classifieur sémantique (CLs) comportant au moins une troisième classe ontologique (C₃) caractérisant un domaine sémantique prédéfini en fonction d'une première ontologie prédéfinie et des occurrences des termes extraits dans chaque contenu numérique sélectionné et ;
▪ calcul (AS) de troisièmes vecteurs caractéristiques de sorties (K_{F3}), à partir d'une troisième fonction (F₃) dont les entrées comprennent :
▪ au moins une donnée caractérisant un nombre d'échanges du premier individu (U₁) avec au moins un second utilisateur (U_{P}) au sein d'une ressource numérique prédéfinie,
▪ au moins une donnée caractérisant une donnée temporelle relative aux d'échanges du premier individu (U₁) avec au moins un second utilisateur (U_{P}) au sein d'une ressource numérique prédéfinie,
▪ au moins une donnée caractérisant un nombre d'individus associés à un échange de données avec le premier utilisateur (U₁) au sein d'une ressource ;
lesdits vecteurs caractéristiques de sorties (K_{F3}) alimentant :
∘ un troisième classifieur caractérisant des échanges de données (CL_{D}) entre au moins les deux utilisateurs (U₁, U_{P}) ;
▪ génération (GEN) au moyen d'un calculateur d'une liste de profils utilisateurs, ladite liste de profils utilisateurs comportant au moins un profil utilisateur (U_{P}) dont les vecteurs caractéristiques ont été classés dans une pluralité de classes de chaque classifieur (CL_{P}, CLs, CL_{D}).

2. Procédé de classification automatique d'un profil d'utilisateur (U_{P}) selon la revendication 1, **caractérisé en ce que** :
▪ La première fonction apprenante (F₁) comprend la mise en œuvre d'un premier réseau de neurones (CNN₁) et/ou d'une fonction mettant en œuvre une machine à vecteurs de support (SVM₁), ladite première fonction apprenante (F₁) étant entrainée à partir d'un ensemble de données comprenant des contenus numériques (Dₖ) échangés entre au moins deux utilisateurs ; et
▪ La seconde fonction apprenante (F₂) comprend la mise en œuvre d'une fonction apprenante intégrant un apprentissage statistique et/ou d'un second réseau de neurones (CNN₂), ladite dont l'entrée comprend des descripteurs (Tₖᵢ) extraits (EXT₁) de l'ensemble des contenus numériques (Dᵢ) échangés entre au moins les deux utilisateurs (U₁, U_{P}), le second réseau de neurones (CNN₂) étant entrainé à partir d'un ensemble de données comprenant des contenus numériques (Dₖ) échangés entre au moins deux utilisateurs:
▪ La troisième fonction (F₃) comprend la mise en œuvre d'un système expert et/ou d'un troisième réseau de neurones (CNN₃).

3. Procédé de classification automatique d'un profil d'utilisateur (U_{P}) selon la revendication 2, **caractérisé en ce que** lorsque la troisième fonction (F₃) comprend la mise en œuvre d'un système expert, ledit système expert comprenant une base de faits, une base de règle et un moteur d'inférence, la base de règles comportant des seuils et des durées configurées, ladite configuration pouvant être automatiquement mise à jour en fonction de la classification des vecteurs de sorties (K_{F1}, (K_{F2}, K_{F3}).

4. Procédé de classification automatique d'un profil d'utilisateur (U_{P}) selon l'une quelconque des revendications 1 à 3, **caractérisé en ce qu'**au moins une entrée de la troisième fonction (F₃) est un vecteur d'entrée comportant un ensemble d'événements horodatés, lesdits événements correspondant à des échanges de données entre au moins le premier utilisateur (U₁) et au moins un autre utilisateur (U_{P}).

5. Procédé de classification automatique d'un profil d'utilisateur (U_{P}) selon la revendication 1, **caractérisé en ce que** la première fonction apprenante, la seconde fonction apprenante et la troisième fonction sont une même fonction.

6. Procédé de classification automatique d'un profil d'utilisateur (U_{P}) selon la revendication 1, **caractérisé en ce que** les descripteurs extraits comprennent des termes textuels extraits d'un contenu numérique textuel, des métadonnées de contenus numériques, de fichier numérique multimédia.

7. Procédé de classification automatique d'un profil d'utilisateur (U_{P}) selon l'une quelconque des revendications 1 à 6, **caractérisé en ce que** l'ensemble des premiers contenus numériques (Dₖ) échangés entre au moins deux utilisateurs (U₁, U_{P}) comprennent au moins une donnée correspondant à :
▪ Un message de données numériques ;
▪ Une image numérique ;
▪ Une vidéo numérique,
▪ Une interaction à une publication numérique comportant au moins une annotation numérique.

8. Procédé de classification automatique d'un profil d'utilisateur (U_{P}) selon l'une quelconque des revendications 1 à 7, **caractérisé en ce que** l'analyse sémantique comprend une analyse statistique des termes extraits de chacun des contenus numériques (Dₖ) échangés entre les deux individus.

9. Procédé de classification automatique d'un profil d'utilisateur (U_{P}) selon l'une quelconque des revendications 1 à 8, **caractérisé en ce que** lesdits vecteurs caractéristiques classifiés dans l'ensemble des classifieurs (CL_{P}, CL_{S}, CL_{D}) sont associés à un score de vraisemblance, l'ensemble des scores de vraisemblance permettant de calculer un indicateur quantifié déterminant l'inclusion ou non dans la liste générée d'un utilisateur (U_{P}) ayant échangé des données avec le premier utilisateur (U₁).

10. Procédé de classification automatique d'un profil d'utilisateur (U_{P}) selon l'une quelconque des revendications 1 à 9, **caractérisé en ce qu'**il comprend un horodatage desdits premiers contenus numériques sélectionnés (Dₖ).

11. Procédé de classification automatique d'un profil d'utilisateur (U_{P}) selon la revendication 2, **caractérisé en ce qu'**une première donnée temporelle en entrée de la troisième fonction (F₃) comprend la fréquence des données émises par le second utilisateur (U_{P}).

12. Procédé de classification automatique d'un profil d'utilisateur (U_{P}) selon la revendication 2, **caractérisé en ce qu'**une seconde donnée temporelle en entrée de la troisième fonction (F₃) comprend une variabilité temporelle journalière des données émises par le second utilisateur (U_{P}).

13. Procédé de classification automatique d'un profil d'utilisateur (U_{P}) selon la revendication 2, **caractérisé en ce qu'**une troisième donnée temporelle en entrée de la troisième fonction (F₃) comprend une durée moyenne de réponse entre deux échanges successifs entre deux utilisateurs (U₁, U_{P}) échangeant des données.

14. Système comportant :
▪ un terminal électronique (T₁) comportant un calculateur (K₁), au moins une mémoire et un afficheur, **caractérisé en ce qu'**il comprend des moyens de communication pour échanger des données avec un réseau de données, lesdits moyens de communication permettant de recevoir des données provenant d'une pluralité de ressources de données, telles que des plateformes Web et réseaux sociaux, ledit calculateur étant configuré pour ;
▪ sélectionner un ensemble de contenus échangé (Dₖ) avec un premier utilisateur (U₁) du terminal (T₁), lesdits contenus étant associés au premier utilisateur (U₁),
▪ extraire d'un ensemble de descripteurs de l'ensemble des contenus numériques (Dₖ) échangés entre au moins deux utilisateurs (U₁, U_{P}) ;
▪ générer des messages comportant lesdites données extraites vers un serveur distant ;
▪ recevoir des données traitées par ledit serveur distant,
▪ au moins un serveur (SERV₁) distant configuré pour recevoir les données émises par le terminal électronique et mettre en œuvre
▪ première fonction apprenante (F₁) à laquelle sont appliqués des vecteurs d'entrée générés à partir des premiers contenus numériques (Dk) de vecteurs caractéristiques de sorties (K_{F}), lesdits premiers vecteurs caractéristiques de sorties (K_{F1}) alimentant:
▪ un premier classifieur de profils utilisateurs (CL_{P}) comportant au moins une première classe (C₁) associée à un âge dudit premier individu (U₁) et une seconde classe (C₂) associée au genre du premier individu (U₁) ;
▪ une seconde fonction apprenante (F₂) à laquelle appliquée des données d'entrées ou des vecteurs d'entrée générés à partir des premiers contenus numériques (Dk) échangés entre au moins les deux utilisateurs (U₁, U_{P}) de seconds vecteurs caractéristiques de sorties (K_{F2}), lesdits seconds vecteurs caractéristiques de sorties (K_{F2}) alimentant :
▪ un second classifieur sémantique (CLs) comportant au moins une troisième classe ontologique (C₃) caractérisant un domaine sémantique prédéfini en fonction d'une première ontologie prédéfinie et des occurrences des termes extraits dans chaque contenu numérique sélectionné et ;
▪ une troisième fonction (F₃) délivrant des troisièmes vecteurs caractéristiques de sorties (K_{F3}) et dont les entrées comprennent :
▪ au moins une donnée caractérisant un nombre d'échanges du premier individu (U₁) avec au moins un second utilisateur (U_{P}) au sein d'une ressource numérique prédéfinie,
▪ au moins une donnée caractérisant une donnée temporelle relative aux d'échanges du premier individu (U₁) avec au moins un second utilisateur (U_{P}) au sein d'une ressource numérique prédéfinie,
▪ au moins une donnée caractérisant un nombre d'individus associés à un échange de données avec le premier utilisateur (U₁) au sein d'une ressource ;
lesdits vecteurs caractéristiques de sorties (K_{F3}) alimentant :
▪ un troisième classifieur caractérisant des échanges de données (CL_{D}) entre au moins les deux utilisateurs (U₁, U_{P}) ;
ledit serveur (SERVi) étant, en outre, configuré pour générer une liste de profils utilisateurs associés à une classification de vecteurs caractéristiques dans chaque classifieur (CL_{P}, CLs, CL_{D}), ladite liste comportant au moins un second utilisateur (U_{P}) ayant échangé des données avec le premier utilisateur (U₁), ledit serveur étant configuré pour émettre vers un second terminal électronique (T₂) un message d'alerte lorsque ledit second profil utilisateur est identifié dans la liste générée.
